(19) Europäisches Patentamt / European Patent Office / Office européen des brevets

(11) **EP 3 249 353 B1**

(12) **EUROPÄISCHE PATENTSCHRIFT**

(45) Veröffentlichungstag und Bekanntmachung des Hinweises auf die Patenterteilung:
**08.09.2021  Patentblatt 2021/36**

(51) Int Cl.:
***G01C 17/38*** *(2006.01)*

(21) Anmeldenummer: **16171143.7**

(22) Anmeldetag: **24.05.2016**

(54) **OPTOELEKTRONISCHES MESSGERÄT MIT MAGNETKOMPASS UND KOMPENSATIONSFUNKTIONALITÄT**

OPTOELECTRONIC MEASURING DEVICE WITH MAGNETIC COMPASS AND COMPENSATION FUNCTIONALITY

APPAREIL DE MESURE OPTOÉLECTRIQUE DOTE D'UN COMPAS MAGNÉTIQUE ET FONCTIONNALITÉ DE COMPENSATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.11.2017  Patentblatt 2017/48**

(73) Patentinhaber: **Safran Vectronix AG 9435 Heerbrugg (CH)**

(72) Erfinder:
• **ANNEN, Ivo CH-8834 Schindellegi (CH)**
• **GNEPF, Silvio 9435 Heerbrugg (CH)**

(74) Vertreter: **Kaminski Harmann Patentanwälte AG Landstrasse 124 9490 Vaduz (LI)**

(56) Entgegenhaltungen:
**US-A1- 2007 233 381      US-A1- 2011 106 474
US-A1- 2012 070 137      US-A1- 2015 012 234**

• **None**

**Beschreibung**

Die Erfindung betrifft ein optoelektronisches Messgerät, insbesondere Zielgerät, mit einem elektronischen Magnetkompass zum Bestimmen der azimutalen Ausrichtung des Messgeräts sowie ein Verfahren zum Bestimmen einer azimutalen Ausrichtung eines solchen optoelektronischen Messgerätes. Insbesondere betrifft die Erfindung eine automatische Kompensation von gerätefesten hartmagnetischen Störeinflüssen aufgrund unterschiedlicher Betriebszustände des Messgerätes.

Derartige Messgeräte werden, beispielsweise bei der Objektaufnahme und Datensammlung für Geographische Informationssysteme (GIS), zum Bestimmen von Koordinaten entfernter Objekte eingesetzt. Solche Messgeräte können auch als tragbare Zielgeräte ausgebildet sein, die insbesondere bei Koordinatenbestimmungen militärischer Zielobjekte Verwendung finden, wie z. B. in der US 7,325,320 B2 beschrieben.

Ein derartiges Bestimmen von Zielkoordinaten erfordert die Relativkoordinaten zwischen dem Messgerät und dem Zielobjekt. Für diesen Zweck wird das Zielgerät auf das Zielobjekt ausgerichtet und dann die azimutale und die zenitale Ausrichtung des Zielgeräts relativ zur Erde bestimmt. Die bestimmten Winkelwerte können dann zusammen mit jeweils einem typischen Genauigkeitswert an einer Datenschnittstelle des Zielgeräts zur Übermittlung an eine Feuerleiteinrichtung bereitgestellt werden. Von der Feuerleiteinrichtung kann dann über eine Feuereinheit Feuerwirkung in ein den übermittelten Zielkoordinaten zugeordnetes Gebiet eingebracht werden.

In Bezug auf die erzielbare Genauigkeit der zu bestimmenden Zielkoordinaten ist der Magnetkompass die kritische Komponente. Aufgrund des übermittelten Genaugkeitwerts der azimutalen Ausrichtung lässt sich einerseits der Effekt einer einzubringenden Feuerwirkung auf das Zielobjekt und andererseits die Wahrscheinlichkeit von Kollateralschäden beurteilen. Bei einer wesentlichen Abweichung zwischen dem effektiven und dem vorgegebenen typischen Genauigkeitswert kann diese Beurteilung falsch sein.

Auch mit einem elektronischen Magnetkompass ist beim Bestimmen azimutaler Ausrichtungen nach wie vor grosse Vorsicht geboten, obwohl die Komponenten des Magnet- und Gravitationsfelds als solches mit ausreichender Gerätegenauigkeit messbar sind. Auch lässt sich heute, wie aus der US 4 949 089 bekannt, die Missweisung des Erdmagnetfelds von der geographischen Nordrichtung mittels der in militärischen GPS-Empfängern implementierten "Magnetic-Variation-Compensation" praktisch automatisch berücksichtigen. Da jedoch das gemessene Magnetfeld neben dem Erdmagnetfeld, dem Träger der Nordrichtungsinformation, in der Regel diesem überlagerte, magnetische Störfelder umfasst, kann die azimutale Ausrichtung relativ zur geographischen Nordrichtung dennoch oft nur mit einer sehr beschränkten Genauigkeit und Zuverlässigkeit, die ein Vielfaches der reinen Gerätegenauigkeit sein kann, bestimmt werden.

Diese magnetischen Störfelder umfassen dem Messort zugeordnete, sogenannte ortsfeste Störfelder und sogenannte gerätefeste Störfelder, die auf elektrische Ströme sowie hart- und weichmagnetische Materialien des Geräts zurückgehen, in das der Magnetkompass eingebaut ist. Ortsfeste Störfelder werden zudem in Störfelder von regionalem und Störfelder von lokalem Massstab unterschieden.

Störfelder von regionalem Massstab, sogenannte Anomalien des Erdmagnetfeldes, gehen in der Regel auf natürliche Störeinflüsse, beispielsweise grossräumige Ablagerungen von Eisenerz, zurück. Diese Störfelder sind in einem lokalen Massstab betrachtet homogen und bewirken lokal, vergleichbar der Missweisung des Erdmagnetfeldes, einen konstanten Azimutfehler.

Störfelder von lokalem Massstab gehen hingegen auf von Menschenhand geschaffene Objekte, beispielsweise Eisenbahngleise, Wasser- oder Freileitungen, Pipelines oder Bauwerke aus Stahl und Stahlbeton, zurück. Auch quasistationäre Objekte, wie abgestellte Fahrzeuge oder in Stellung gebrachte Waffensysteme, verursachen magnetische Störfelder von lokalem Massstab. Diese Störfelder sind in einem lokalen Massstab betrachtet inhomogen und bewirken auch innerhalb von Messräumen mit Abmessungen von Metern variierende Azimutfehler, welche an manchen Orten auch verschwinden können.

Aus dem Stand der Technik ist eine Vielzahl von verschiedenen Verfahren bekannt, die es ermöglichen, magnetische Störeinflüsse bei Magnetkompassen zu kompensieren. Wie beispielsweise aus der DE 196 09 762 C1 bekannt, lassen sich gerätefeste Störfelder eines Geräts mit einem elektronischen Magnetkompass, der Sensoren zum dreidimensionalen Messen eines Magnet- und Gravitationsfelds aufweist, beim Bestimmen azimutaler Ausrichtungen des Geräts mittels einer Vektorgleichung arithmetisch kompensieren. Die Parameter der Vektorgleichung müssen vorher mittels eines Optimierungsverfahrens bestimmt werden. Dieses Optimierungsverfahren basiert auf Werten einer mehr oder weniger starr vorgegebenen Abfolge von Messungen des Magnet- und Gravitationsfelds an einem Messort. Dabei wird das Gerät bei jeder dieser Messungen jeweils unterschiedlich im Raum ausgerichtet. Auf diese Weise können jedoch ortsfeste magnetische Störfelder weder kompensiert noch am Messort detektiert werden.

Hartmagnetische Materialien und Ströme fügen zu den Magnetfeldwerten, die von dem Magnetkompass ermittelt werden, einen weiteren Versatz hinzu. Wenn der Versatz auf Strömen beruht, so ist er proportional zu diesen. Eine allgemeine Korrektur von N Versatz-Quellen wird durch

$$\Delta o = \sum_{j=1}^{N}\left(f_1 - f_{jc}\right)\Delta_j$$

gegeben, wobei $\Delta o$ und die $\Delta_j$ $3\times 1$-Vektoren sind, die $f_j$ die gegenwärtigen Systemzustandswerte, und die $f_{jc}$ die Systemzustandswerte während der letzten Kompensation.

Die $\Delta_j$ können an einem mechanisch und magnetisch stabilen Ort durch Messen des Unterschiedes zwischen den Gesamtmagnetfeldern bei an- und ausgeschaltetem Strom ermittelt werden, bzw. bei dem hartmagnetischen Bauteil an einer ersten und zweiten Position (z. B. ein Schalter in Ein- und Aus-Position). "Aus" und "An" bzw. Position 1 und Position 2 können dabei in die Zustandsvariablen 0 und 1 übersetzt werden; bei einem Strom mit den Stärken $I_1$ und $I_2$, zu $I_j \times$ Skalierungsfaktor.

Erste Messung: $b_{t1} = b_E + b_0 + b_1 + e_1$, Wert der Zustandsvariable: $f_1$,

Zweite Messung: $b_{t2} = b_E + b_0 + b_2 + e_2$, Wert der Zustandsvariable: $f_2$,

wobei:

- $b_E$: $3\times 1$-Vektor, Erdmagnetfeld der Umgebung (wird als konstant angenomen),
- $b_0$: $3\times 1$-Vektor, Effekt der anderen hartmagnetischen Komponenten des Systems,
- $b_j$: $3\times 1$-Vektoren, der hartmagnetische Versatz, der in den Situationen j=1,2 zu messen ist,
- $e_j$: $3\times 1$-Vektoren, Rauschen.

Dann gilt:

$$\Delta = (b_2 - b_1)/(f_2 - f_1) = (b_{t2} - b_{t1})/(f_2 - f_1).$$

Wenn man annimmt, dass das Rauschen unkorreliert ist und (vereinfacht) in allen drei Komponenten dieselbe Standardabweichung aufweist, also $\langle e_i e_i^T \rangle = s^2{*}I_3$, $\langle e_i e_j^T \rangle = 0$, $i \neq j$, wobei $\langle\ \rangle$ ein Erwartungswert (Durchschnitt von unendlich vielen Messungen) und $I_3$ eine 3x3 Identitätsmatrix ist, wird die Standardabweichung von $\Delta$ gegeben durch:

$$\langle(e_2 - e_1)(e_2 - e_1)^T\rangle/(f_2 - f_1)^2 = (\langle e_2 e_2^T\rangle + \langle e_1 e_1^T\rangle)/(f_2 - f_1)^2$$

$$= (s_1^2 + s_2^2)/(f_2 - f_1)^2{*}I_3 = s^{2}{*}I_3$$

Die geschätzte Systemgenauigkeit mit Versatzkorrektur ist dann gegeben durch:

$$s_{\Delta o}{}^2 = acc^2 + \sum_{j=1}^{N}\left(f_j - f_{jc}\right)^2 s_{\Delta f}^2,$$

wobei acc die geschätzte Genauigkeit bei der letzten Kompensation ist, und $s_{\Delta j}$ die geschätzte Genauigkeit des Kompensationsversatzes.

Daraus folgt, dass der zusätzliche Fehler dann am grössten ist, wenn alle aktuellen Zustände maximal von den Zuständen zum Zeitpunkt der letzten Kompensation abweichen.

Ein gattungsgemässes optoelektronisches Messgerät mit einem Magnetkompass und einer Kompensationsfunktionalität für diesen wird beispielsweise in der US 2015/0012234 A1 beschrieben. Weitere Kompensationsmethoden sind - teilweise aus anderen Gebieten - bekannt z.B. aus US 2012/0070137 A1, US 2007/0233381 A1 oder US 2011/0106474 A1.

Um magnetische Störeinflüsse zumindest zu reduzieren oder vorzugsweise gänzlich zu eliminieren, ist eine Kompensation unumgänglich. Dabei existieren für unterschiedliche Störquellen unterschiedliche Kompensationsmöglichkeiten. Verändern sich die magnetischen Gegebenheiten eines Gerätes mit eingebautem magnetischem Kompass nach bereits erfolgter Kompensation, so muss zwangsläufig eine neue Kompensation durchgeführt werden.

Oft tritt aber das Problem auf, dass der Anwender die eigentlich nötige Kompensation nicht durchführt, wodurch die Genauigkeit des Kompasses reduziert ist. Das Unterlassen der erneuten Kompensation resultiert dabei entweder aus Zeitmangel, aus der Unkenntnis des jeweiligen Anwenders, dass eine weitere Kompensation nötig ist, oder - da das Verfahren häufig als umständlich angesehen wird - auf Bequemlichkeit. Um die Zuverlässigkeit der Messungen auch unter Zeitdruck oder bei wenige erfahrenen Benutzern zu gewährleisten, wäre es daher vorteilhaft, wenn die Zahl der auszuführenden Kompensationen reduziert werden könnte, bzw. wenn der Anwender nach einer Initialkompensation keine weiteren Kompensationen mehr durchführen müsste, nur weil der magnetische Zustand des Gerätes verändert wurde.

Es ist daher eine Aufgabe der Erfindung, ein verbessertes optoelektronisches Messgerät mit einem Magnetkompass bereitzustellen, sowie ein verbessertes Verfahren zum Bestimmen einer azimutalen Ausrichtung eines solchen optoelektronischen Messgerätes.

Eine weitere Aufgabe der Erfindung ist es, ein solches Messgerät und Verfahren mit einer verbesserten Handhabbarkeit für einen Benutzer bereitzustellen, insbesondere wobei eine Messung schneller und mit weniger Aufwand durchführbar ist.

Eine weitere Aufgabe der Erfindung ist es, ein solches Messgerät und Verfahren mit einer geringeren Fehleranfälligkeit bereitzustellen.

Eine weitere Aufgabe ist es, ein solches Messgerät bereitzustellen, dass leichter und kleiner ausgestaltet sein kann, insbesondere hinsichtlich einer Abschirmung des Magnetkompasses gegenüber anderen Komponenten des Messgerätes.

Insbesondere ist es eine Aufgabe, ein solches Messgerät und Verfahren bereitzustellen, bei dem nach einer Initialkompensation keine weitere Kompensation durchgeführt werden muss, wenn sich das gerätefeste magnetische Störfeld ändert.

Mindestens eine dieser Aufgaben wird erfindungsgemäss durch ein optoelektronisches Messgerät mit den Merkmalen des Patentanspruchs 1, bzw. das Verfahren mit den Merkmalen des Anspruchs 9 gelöst. Weitere vorteilhafte Aus- bzw. Weiterbildungen der Erfindung sind in den abhängigen Patentansprüchen beschrieben.

Hat ein Messgerät mehrere mögliche Zustände, die jeweils ein unterschiedliches gerätefestes magnetisches Störfeld aufweisen, so kann gemäss der vorliegenden Erfindung der magnetische Versatz (Offset) zwischen diesen Zuständen vollautomatisch bestimmt werden.

Ein erster Aspekt der Erfindung betrifft ein optoelektronisches Messgerät mit einem elektronischen Magnetkompass zum Bestimmen einer azimutalen Ausrichtung des Messgeräts und einer dem Magnetkompass zugeordneten Kompensationseinrichtung zum Kompensieren gerätefester Störfelder. Dabei ist das Messgerät dazu ausgestaltet, mindestens zwei definierte, wiederholbare Betriebszustände einzunehmen, wobei das Messgerät in jedem der Betriebszustände ein unterschiedliches gerätefestes Störfeld aufweist, und die Kompensationseinrichtung weist eine Kompensationsfunktionalität zum Durchführen einer Initialkompensation des elektronischen Magnetkompasses in einem ersten Betriebszustand des Messgerätes am Ort der Messung auf. Erfindungsgemäss weist die Kompensationseinrichtung eine Erfassungseinheit zum Erfassen eines aktuellen Betriebszustandes des Messgerätes, eine Speichereinheit, in der ab Werk ein aus den unterschiedlichen gerätefesten Störfeldern resultierender magnetischer Versatz zwischen dem ersten Betriebszustand und einem zweiten Betriebszustand des Messgerätes hinterlegt ist, und eine Recheneinheit zum Berechnen der azimutalen Ausrichtung des Messgeräts in Abhängigkeit von einem ermittelten Betriebszustand und basierend auf dem magnetischen Versatz auf. Erfindungsgemäss ist das Messgerät ein handhaltbares optoelektronisches Beobachtungsgerät. Dieses weist eine Anzeigeeinheit zum Anzeigen der azimutalen Ausrichtung auf. Das Beobachtungsgerät weist insbesondere eine Schnittstelle zum Bereitstellen eines Signals, das Information über die azimutale Ausrichtung umfasst, für einen externen Empfänger, insbesondere ein Geographisches Informationssystem, eine militärische Feuerleiteinrichtung oder ein handhaltbares Datenverarbeitungsgerät, auf.

Erfindungsgemäss weist das Messgerät mindestens ein zuschaltbares elektrisches System auf, wobei der erste und der zweite Betriebszustand des Messgerätes sich zumindest hinsichtlich eines aktuellen Zustandes des elektrischen Systems voneinander unterscheiden, insbesondere darin, dass das elektrische System des Messgerätes einbzw. ausgeschaltet ist, und wobei die Erfassungseinheit zum Erkennen eines aktuellen Zustandes des elektrischen Systems ausgestaltet ist.

Das zuschaltbare elektrische System ist dabei insbesondere ein Nachtsichtsystem oder eine Anzeigeeinrichtung, insbesondere aufweisend ein LCD-Display, weist eine Helligkeitsregelung auf, oder ist ein GPS- oder ein Bluetooth-Modul.

Erfindungsgemäss unterscheiden sich der erste und der zweite Betriebszustand des Messgerätes in einer aktuellen Stromstärke und/oder Spannung in dem elektrischen System voneinander, und die Erfassungseinheit ist zum Ermitteln einer aktuellen Stromstärke bzw. Spannung in dem elektrischen System ausgestaltet.

Gemäss einer Ausführungsform weist das erfindungsgemässe Messgerät mindestens ein hartmagnetisches Bauteil auf, das dazu ausgestaltet ist, mindestens zwei unterschiedliche Positionen im oder am Messgerät einzunehmen, wobei der erste und der zweite Betriebszustand sich darin voneinander unterscheiden, dass das hartmagnetische Bauteil jeweils eine andere Position aufweist. Dabei ist das hartmagnetische Bauteil insbesondere ein mechanischer Schalter, insbesondere ein von einem Benutzer zu betätigender Kipp-, Dreh- oder Schiebeschalter, oder ein motorisiert verfahrbares Element, insbesondere ein im Rahmen eines Zoom-Vorgangs verfahrbares optisches Element.

In einer weiteren Ausführungsform des erfindungsgemässen Messgerätes ist die Kompensationseinrichtung dazu ausgestaltet, im Rahmen der Kompensationsfunktionalität einen Benutzer des Messgerätes zum Ausführen der Initialkompensation anzuleiten, insbesondere mittels einer Ausgabe von Handlungsanweisungen auf einer Anzeigeeinheit des Messgerätes.

Gemäss einer weiteren Ausführungsform weist der Magnetkompass mindestens drei gerätefest angeordnete Messsensoren zum Messen eines Magnetfelds und der Richtung des Gravitationsfelds auf.

Gemäss einer weiteren Ausführungsform weist das Messgerät in dem ersten und in dem zweiten Betriebszustand ein jeweils unterschiedliches hartmagnetisches gerätefestes Störfeld auf.

Ein zweiter Aspekt der Erfindung betrifft ein Verfahren zum Bestimmen einer azimutalen Ausrichtung eines optoelektronischen Messgerätes, wobei das Messgerät einen Magnetkompass aufweist und dazu ausgestaltet ist, eine Mehrzahl an definierten, wiederholbaren Betriebszuständen mit einem jeweils unterschiedlichen gerätefesten Störfeld einzunehmen. Das Verfahren weist eine Initialkompensation des elektronischen Magnetkompasses in einem ersten Betriebszustand des Messgerätes am Ort der Messung, sowie ein Bestimmen der azimutalen Ausrichtung des Messgerätes mittels des Magnetkompasses in einem zweiten Betriebszustand des Messgerätes auf. Erfindungsgemäss weist das Verfahren ausserdem ein automatisches Erkennen des ersten Betriebszustandes und des zweiten Betriebszustandes und ein automatisches Bereitstellen von Informationen über einen ab Werk in einem Speicher des Beobachtungsgerätes hinterlegten, aus den unterschiedlichen gerätefesten Störfeldern resultierenden magnetischen Versatz zwischen dem ersten und dem zweiten Betriebszustand auf, wobei das Bestimmen der azimutalen Ausrichtung unter Berücksichtigung des magnetischen Versatzes erfolgt.

Erfindungsgemäss unterscheiden sich der erste und der zweite Betriebszustand des Messgerätes zumindest hinsichtlich eines aktuellen Zustandes eines elektrischen Systems des Messgerätes voneinander, insbesondere darin, dass ein elektrisches System des Messgerätes ein- bzw. ausgeschaltet ist, und das Erkennen des ersten und zweiten Betriebszustandes des Messgerätes umfasst mindestens ein Erkennen eines aktuellen Zustandes des elektrischen Systems.

Das elektrische System ist dabei insbesondere ein Nachtsichtsystem oder eine Anzeigeeinrichtung, insbesondere aufweisend ein LCD-Display, weist eine Helligkeitsregelung auf, oder ist ein GPS- oder ein Bluetooth-Modul.

Erfindungsgemäss umfasst das Erkennen des aktuellen Zustandes des elektrischen Systems ein Ermitteln einer aktuellen Stromstärke und/oder Spannung in dem elektrischen System, insbesondere wobei die Informationen über den magnetischen Versatz auf mindestens einer ermittelten Stromstärke und/oder Spannung basierend bereitgestellt werden.

In einer Ausführungsform des erfindungsgemässen Verfahrens unterscheiden sich der erste und der zweite Betriebszustand des Messgerätes zumindest darin voneinander, dass ein hartmagnetisches Bauteil des Messgerätes eine andere Position aufweist, und das Erkennen des ersten und zweiten Betriebszustandes des Messgerätes umfasst mindestens ein Erkennen einer aktuellen Position des hartmagnetischen Bauteiles. Dabei ist das hartmagnetische Bauteil insbesondere ein mechanischer Schalter, insbesondere ein von einem Benutzer zu betätigender Kipp-, Dreh- oder Schiebeschalter, oder ein motorisiert verfahrbares Element, insbesondere ein im Rahmen eines Zoom-Vorgangs verfahrbares optisches Element.

Gemäss einer weiteren Ausführungsform umfasst das Verfahren ein Erkennen eines Wechsels von dem ersten Betriebszustand in den zweiten Betriebszustand, insbesondere wobei das Erkennen des Wechsels ein Erfassen eines Ein- bzw. Ausschaltens eines elektrischen Systems des Messgerätes, und/oder einer Positionsveränderung eines hartmagnetischen Bauteiles des Messgerätes umfasst.

Erfindungsgemäss werden im Rahmen der Initialkompensation Initialkompensationsdaten ermittelt und gespeichert, in dem zweiten Betriebszustand des Messgerätes von dem Magnetkompass Magnetfeld-Rohdaten erfasst, sowie der magnetische Versatz und die Magnetfeld-Rohdaten zur Berechnung von Magnetfeld-Versatzdaten verwendet, wobei das Bestimmen der azimutalen Ausrichtung basierend auf den Initialkompensationsdaten und den Magnetfeld-Versatzdaten erfolgt.

Die Erfindung betrifft ausserdem ein Computerprogrammprodukt mit Programmcode, der auf einem maschinenlesbaren Träger gespeichert ist, zur Ausführung des erfindungsgemässen Verfahrens, insbesondere wenn das Programm auf einer als Kompensationseinrichtung des erfindungsgemässen Messgerätes ausgebildeten elektronischen Datenverarbeitungseinheit ausgeführt wird.

Nachstehend wird die Erfindung anhand von Figuren näher erläutert. Es zeigen in schematischer Darstellung:

Fig. 1    eine beispielhafte Ausführungsform eines erfindungsgemässen Messgeräts mit Magnetkompass;

Fig. 2    eine beispielhafte Messanordnung zum Bestimmen von Zielkoordinaten eines entfernten Objekts mit einem Messgerät mit Magnetkompass auf einem Stativ;

Fig. 3a-b    zwei beispielhafte Betriebszustände eines erfindungsgemässen Messgeräts mit jeweils unterschiedlichem gerätefesten Störfeld;

Fig. 4 eine beispielhafte Anordnung von das gerätefeste Störfeld beeinträchtigenden elektrischen Systemen eines erfindungsgemässen Messgeräts;

Fig. 5a-b Flussdiagramme zur Illustration zweier Verfahren des Standes der Technik zum Bestimmen einer azimutalen Ausrichtung;

Fig. 6 ein Flussdiagramm zur Illustration einer beispielhaften Ausführungsform eines erfindungsgemässen Verfahrens zum Bestimmen einer azimutalen Ausrichtung; und

Fig. 7 einen beispielhaften Rechenweg zum Bestimmen der azimutalen Ausrichtung im Rahmen eines erfindungsgemässen Verfahrens.

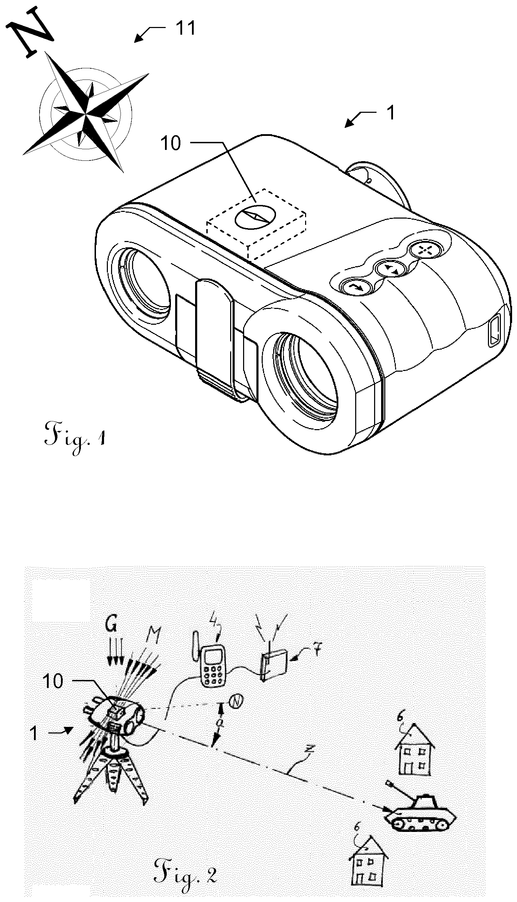

Figur 1 zeigt ein beispielhaftes erfindungsgemässes optoelektronisches Messgerät 1. Das hier rein beispielhaft dargestellte Messgerät 1 ist als ein handhaltbares Beobachtungsgerät zur Beobachtung eines Zielobjekts und zur Erfassung von Koordinaten des Zielobjekts ausgestaltet. Zu diesem Zweck weist es unter anderem einen Magnetkompass 10 zur Bestimmung einer azimutalen Ausrichtung des Messgerätes 1 relativ zum Erdmagnetfeld 11 auf. Als Magnetkompass 10 für ein solches erfindungsgemässes Gerät ist beispielsweise die DMC-Serie von Vectronix verwendbar. Das Messgerät 1 weist ausserdem eine Kompensationsfunktionalität auf zum Durchführen einer Kompensation des Magnetkompasses 10 vor einem Erfassen von Koordinaten.

Figur 2 zeigt eine beispielhafte Messanordnung zum Bestimmen von Zielkoordinaten eines entfernten Zielobjekts 5. Die Messanordnung weist ein Messgerät 1, das auf einem Stativ aus amagnetischem Material befestigt ist, einen GPS-Empfänger 4 und eine Übertragungseinrichtung 7 auf. Das Zielobjekt 5 wird hier von einem Kettenfahrzeug gebildet, das neben einem Haus 6 in Stellung gegangen ist. Die hier als externe Geräte dargestellten Komponenten GPS-Empfänger 4 und Übertragungseinrichtung 7 können alternativ auch in das Messgerät 1 integriert sein.

Im Messgerät 1, das hier als Beobachtungsgerät ausgebildet ist und ein Zielfernglas mit einer Zielachse Z aufweist, sind ein Laserentfernungsmesser und ein digitaler Magnetkompass 10 integriert. Im Gegensatz zum Laserentfernungsmesser ist der digitale Magnetkompass 10 als kleiner Quader innerhalb des Fernglases zeichnerisch angedeutet. Über den digitalen Magnetkompass 10, der hier drei gerätefest angeordnete Magnetfeldsensoren zum dreidimensionalen Messen eines Magnetfelds M und zwei Neigungssensoren zum Messen der Richtung des Gravitationsfelds G der Erde aufweist, wird die azimutale Ausrichtung a des Messgeräts 1 relativ zu einer kalkulatorischen Nordrichtung N und dessen zenitale Ausrichtung relativ zur einer Lotrechten bestimmt.

Bei der kalkulatorischen Nordrichtung N ist die - in regionalem Massstab ortsabhängige - Missweisung des Erdmagnetfelds gegenüber der geographischen Nordrichtung berücksichtigt. In an sich bekannter Weise kann dies durch Übermitteln eines für die jeweilige Region spezifischen Deklinationswerts vom GPS-Empfänger 4 zum Messgerät 1 praktisch automatisch erfolgen.

Ebenso wie die Berücksichtigung des korrekten Deklinationswerts ist eine korrekte Kompensation gerätefester Störfelder eine Grundvoraussetzung für ein korrektes Bestimmen der azimutalen Ausrichtung, da sich gerätefeste Störfelder in unmittelbarer Nachbarschaft zum Magnetkompass 10 befinden und daher nicht berücksichtigte Änderungen gerätefester Störfelder beachtliche Azimutfehler verursachen können. Auch gerätefeste Störfelder sind hier bei der kalkulatorischen Nordrichtung N berücksichtigt.

Da bei dieser Messanordnung die gerätefesten Störfelder korrekt kompensiert werden und sich keine ortsfesten Störfelder von lokalem Massstab in der Nähe des Messgeräts 1 befinden, liegt ein im Wesentliches homogenes Magnetfeld M, in dem azimutale Ausrichtungen a relativ zueinander korrekt ohne Kreisfehler bestimmt werden können. Diese Homogenität wird zusätzlich durch die Befestigung des Messgeräts 1 auf dem Stativ erhöht, da der Magnetkompass 10 nur innerhalb eines sehr kleinen Messraums von einigen wenigen Zentimetern bewegt werden kann.

Ortsfeste magnetische Störfelder von regionalem Massstab, welche einen konstanten Azimutfehler verursachen, können zum Schätzen der Genauigkeit azimutaler Ausrichtungen a detektiert und grob abgeschätzt werden. Bei diesem Verfahren wird mit dem digitalen Magnetkompass 10 bei einem Bestimmen einer azimutalen Ausrichtung a gleichzeitig wenigstens eine Feldgrösse des Magnet- und Gravitationsfelds G und M, hier die magnetische Inklination, bereitgestellt. Da hier der Messort, beispielsweise über den GPS-Empfänger 4, dem Messgerät 1 bekannt ist, kann die gemessene magnetische Inklination selbsttätig mit der regional ortsabhängigen magnetischen Inklination eines Modells des Erdmagnetfelds - hier des IGRF-Modells - im Lichte eines vorgegebenen Schwellwerts beurteilt und eine Genauigkeit der azimutalen Ausrichtung a festgesetzt werden.

Ist die Differenz zwischen der beim Bestimmen der azimutalen Ausrichtung a gemessenen magnetischen Inklination und der magnetischen Inklination des IGRF-Modells im Vergleich zum Schwellwert bedeutend, so ist ein ortsfestes magnetisches Störfeld von regionalem Ausmass vorhanden. In diesem Fall ist die Schätzung der Genauigkeit der azimutalen Ausrichtung a durch das Messgerät 1 entsprechend anzupassen.

Ist hingegen die Differenz im Vergleich zum Schwellwert unbedeutend, so dürfte kein bedeutendes, ortsfestes magnetisches Störfeld von regionalem Ausmass vorhanden sein. Da hier zudem kein ortsfestes Störfeld von lokalem Massstab in der Nähe des Messgeräts 1 vorhanden ist und die Missweisung sowie die gerätefesten Störfelder korrekt berücksichtigt sind, kann gemäss einem weiteren Verfahren die Genauigkeit azimutaler Ausrichtungen a entsprechend einer Kompensationsgenauigkeit festgesetzt werden. Diese resultiert aus der arithmetischen Kompensation gerätefester Störfelder und stellt eine Höchstgrenze für die erreichbare Genauigkeit azimutaler Ausrichtungen a dar, wenn gerätefeste Störfelder vorhanden sind und diese beim Bestimmen azimutaler Ausrichtungen a kompensiert werden. Bei der vorliegenden Messanordnung ohne ortsfeste Störfelder wird die Genauigkeit azimutaler Ausrichtungen a in guter Näherung durch die Kompensationsgenauigkeit bestimmt.

Die arithmetische Kompensation gerätefester Störfelder erfolgt gemäss der Offenbarung der DE 196 09 762 C1 über eine Vektorgleichung, deren Parameter mittels eines Optimierungsverfahrens bestimmt wurden. Das Optimierungsverfahren basiert auf Werten einer vorgegebenen Abfolge von Messungen des Magnet- und Gravitationsfelds M und G, bei welcher Abfolge das Messgerät 1 an einem Messort jeweils unterschiedlich im Raum ausgerichtet ist. Die Kompensationsgenauigkeit wird mit Hilfe eines Verfahrens der statistischen Ausgleichsrechnung geschätzt, welches unter Berücksichtigung der festgelegten Parameter der Vektorgleichung auf den Werten der Abfolge von Messungen basiert.

Nachdem die azimutale Ausrichtung a des auf das Zielobjekt 5 ausgerichteten Messgeräts 1 bestimmt ist, wird an einer Schnittstelle des Messgeräts 1 ein Signal bereitgestellt, das unter anderem die bestimmte azimutale Ausrichtung a und deren geschätzte Genauigkeit umfasst. Das bereitgestellte Signal wird zum GPS-Empfänger 4 übermittelt, dort bei der Berechnung der Zielkoordinaten und deren geschätzter Genauigkeit berücksichtigt und über die Übertragungseinrichtung 7 zu einer (hier nicht dargestellten) Feuerleiteinrichtung übertragen. Anstelle einer militärischen Feuerleiteinrichtung, insbesondere bei zivilen Anwendungen, kann der Empfänger auch ein Geographisches Informationssystem (GIS) oder ein sonstiges Datenverarbeitungssystem bzw. -gerät sein, insbesondere ein handhaltbares Smartphone oder ein Tablet-Computer.

Aufgrund im Messgerät 1 implementierter Verfahren zum Schätzen der Genauigkeit der azimutalen Ausrichtung a, kann die Genauigkeit relativ zuverlässig abgeschätzt werden. Dadurch kann bei einer gegen die Zielkoordinaten geplanten Feuerwirkung ein möglicher Kollateralschaden am Haus 6 rechtzeitig erkannt werden.

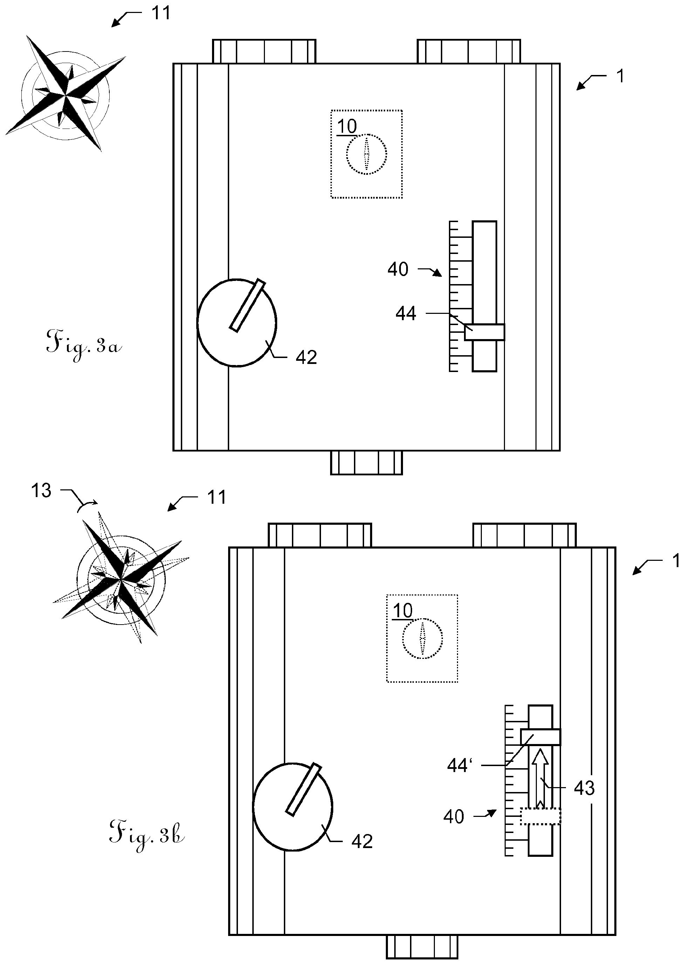

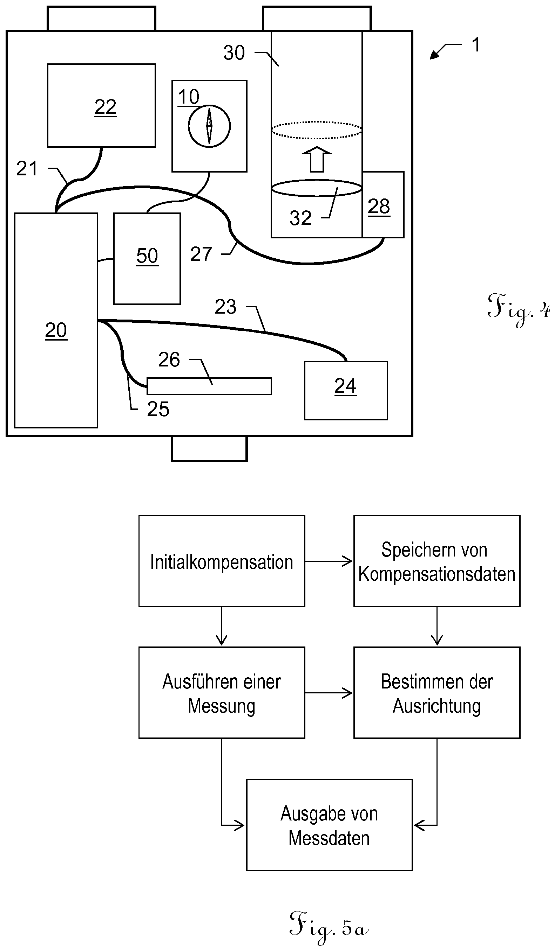

Elektronische Messgeräte 1 wie das in Figur 1 dargestellte Beobachtungsgerät weisen in der Regel eine Vielzahl an möglichen Betriebszuständen auf. Diese Betriebszustände können zu einer unterschiedlich ausgeprägten Störung des Magnetfeldes führen, was zu einer unterschiedlichen Angabe der azimutalen Ausrichtung durch den Magnetkompass führt. Mögliche Ursachen für solche magnetisch veränderliche Zustände eines Messgerätes werden in den Figuren 3a,b und 4 illustriert.

Dabei zeigen die Figuren 3a und 3b ein Beobachtungsgerät 1 in der Aufsicht. Der im Inneren des Gerätes integrierte Magnetkompass 10 ist mit gepunkteten Linien dargestellt. Auf dem Beobachtungsgerät 1 sind hier beispielhaft zwei durch einen Benutzer des Gerätes von Hand verstellbare Schalter 40, 42 dargestellt, die ganz oder teilweise aus hartmagnetischen Materialien bestehen: ein Schiebeschalter 40, beispielsweise zum stufenlosen Einstellen eines Zoomfaktors, und ein Drehschalter 42, beispielsweise zum Ein- und Ausschalten eines Nachtsichtbetriebs. Die beiden Schalter 40, 42 nehmen dabei in Figur 3a jeweils eine erste Position ein.

Wird eine Kompensation des Magnetkompasses 10 in diesem Betriebszustand des Gerätes 1 durchgeführt, d. h. mit diesen Positionen der beiden Schalter 40, 42, so ist eine hochgenaue Bestimmung der azimutalen Ausrichtung anhand des Magnetfeldes 11 auch nur in diesem Betriebszustand möglich.

In Figur 3b ist eine Situation dargestellt, in welcher der Schiebeschalter 40 von der ersten Position 44 (siehe Figur 3a) durch eine Schiebebewegung 43 (insbesondere manuell ausgeführt durch einen Benutzer) in eine zweite Position 44' bewegt wurde. Aufgrund der hartmagnetischen Eigenschaften des Schalters 40, ändert sich dadurch das gerätefeste Störfeld. Das Magnetfeld 11 wird folglich durch den Magnetkompass 10 mit einer gewissen Abweichung, dem Versatz oder Offset, ermittelt. Dieser Versatz 13 beschreibt dabei den Unterschied des ermittelten Magnetfelds zwischen dem Gerätezustand während der Initialkompensation und dem Gerätezustand während der Koordinatenmessung. Aufgrund des entstehenden Versatzes 13 müsste bei Geräten und Verfahren des Standes der Technik nun eigentlich eine neue Kompensation erfolgen, was für den Benutzer aber zeitaufwendig wäre und daher oft lästig. Oft führen das Unwissen über die Notwendigkeit einer erneuten Kompensation oder die Mühseligkeit des Verfahrens dazu, dass der Anwender keine erneute Kompensation durchführt, was die Genauigkeit des Kompasses 10 reduziert.

Erfindungsgemäss weist das Gerät daher eine Kompensationseinrichtung auf, die dazu ausgestaltet ist, den Betriebszustand des Gerätes zu erfassen und - abhängig von einem ersten Betriebszustand während der Kompensation und einem aktuellen Betriebszustand - einen magnetischen Versatzwert aus einem Datenspeicher der Kompensationseinrichtung abzurufen. Dieser Versatzwert wird dann bei der Ermittlung der tatsächlichen azimutalen Ausrichtung des Geräts 1 berücksichtigt.

Mit Bezug zu den Figuren 3a und 3b bedeutet dies, dass zunächst die Positionen der beiden Schalter 40, 42 während der Kompensation automatisch erfasst wird. Anschliessend werden die Positionen weiter erfasst, sodass der Positionswechsel 43 und/oder die neue Position 44' des Schiebeschalters 40 erkannt wird. Der daraus resultierende Versatz 13 ist in einem Speicher der Kompensationseinheit hinterlegt und kann aus diesem bei Bedarf abgerufen und zur Bestimmung der Ausrichtung herangezogen werden. Das Erfassen der Positionen kann sowohl kontinuierlich fortlaufend als auch anlassbezogen erfolgen. Anlassbezogen bedeutet dabei insbesondere, dass die Positionen zumindest immer dann erfasst werden, wenn eine Kompensation oder eine Messung durchgeführt wird. Alternativ kann auch eine Positionsänderung überwacht werden, wobei der Gerätezustand beispielsweise auch nur bei einer erkannten Änderung aktualisiert wird.

Figur 4 zeigt das Messgerät 1 in einem schematischen Querschnitt mit beispielhaften internen Komponenten. Die dargestellten internen Komponenten umfassen zum einen den Magnetkompass 10 mit einer diesem zugeordneten Kompensationseinrichtung 50 und zum anderen mögliche hartmagnetische Störquellen, die die Bestimmung einer azimutalen Ausrichtung durch den Magnetkompass 1 negativ beeinflussen können. Dargestellt sind eine Energiequelle in Form eines Akkus 20 und als Verbraucher rein beispielhaft eine Nachtsichtvorrichtung 22, ein GPS-Modul 24, ein LCD-Display 26, sowie ein Motor 28 zum Betätigen einer Zoomvorrichtung 30. Zwischen dem Akku 25 und jedem der Verbraucher 22, 24, 26, 28 verläuft eine elektrische Leitung 21, 23, 25, 27.

Sowohl die Leitungen als auch die Verbraucher stellen als zuschaltbare elektrische Systeme mögliche elektrische Störquellen 21-28 für den Magnetkompass 10 dar. Wird eine Kompensation des Gerätes 1 in einem Zustand durchgeführt, in dem das GPS-Modul 24 und das LCD-Display 26 eingeschaltet sind, d. h. entsprechende Ströme durch die elektrischen Leitungen 23, 25 zu den beiden Verbrauchern fliessen, werden diese hartmagnetischen Störquellen kompensiert, sodass der Magnetkompass 10 in diesem Zustand des Gerätes 1 zuverlässig funktioniert.

Wird danach jedoch die Nachtsichtvorrichtung 22 in Betrieb genommen, fliessen zusätzliche Ströme durch die Leitung 21. Diese zusätzliche, nicht kompensierte Störquelle verursacht eine fehlerhafte Messung des Magnetkompasses 10.

Darüber hinaus kann die Nachtsichtfunktion einen erhöhten Stromverbrauch des LCD-Displays 26 verursachen, wodurch die Störquelle des Stromflusses zu diesem elektrischen System grösser wird.

Auch in dieser Ausführungsform weist das Gerät eine Kompensationseinrichtung 50 auf, die dazu ausgestaltet ist, den Betriebszustand des Gerätes zu erfassen und abhängig von einem ersten Betriebszustand während der Kompensation und einem aktuellen Betriebszustand einen magnetischen Versatzwert aus einem Speicher abzurufen. In dieser Ausführungsform ist die Kompensationseinrichtung 50 dazu ausgestaltet, den Zustand der einzelnen elektrischen Systeme zu erfassen. Der Störeinfluss jedes dieser Systeme sowohl im ein- als auch ausgeschalteten Zustand auf den Magnetkompass 10 ist bekannt und vorzugsweise ab Werk in einem Speicher der Kompensationseinrichtung 50 hinterlegt.

Mit Bezug zu dem oben beschriebenen Beispiel heisst das, dass die Kompensationseinrichtung 50 erkennt, dass während der Kompensation das GPS-Modul 24 und das LCD-Display 26 eingeschaltet sind, und anschliessend mit der Nachtsichtvorrichtung 22 ein weiteres Gerät in Betrieb genommen wird, das den Magnetkompass 10 im eingeschalteten Zustand beeinträchtigt. Der Unterschied der Beeinträchtigungen, d. h. hier die zusätzliche Beeinträchtigung durch die eingeschaltete Nachtsichtvorrichtung 22, ist als Versatzwert in dem Speicher der Kompensationseinrichtung 50 hinterlegt und wird zur Ermittlung der aktuellen azimutalen Ausrichtung herangezogen.

Die Zoomvorrichtung 30 weist hier ein verstellbares optisches Element 32 auf. Auch dieses kann teilweise hartmagnetisch sein. Vorzugsweise ist daher auch eine Position des optischen Elements 32 durch die Kompensationseinrichtung 50 erfassbar und entsprechende Versatzwerte sind im Speicher abrufbar bereitgestellt.

Optional kann auch eine aktuelle Stromstärke oder Spannung in den elektrischen Systemen bzw. Leitungen erfassbar sein. Da zum Beispiel das LCD-Display 26 abhängig von einer Helligkeit der Darstellung unterschiedlich viel Strom verbraucht, fällt der Störeinfluss des Displays 26 und seiner elektrischen Leitung 25 je nach aktuell dargestellter Helligkeit entsprechend unterschiedlich aus. Ein Wert für den Versatz kann so mit feineren Abstufungen als ein/aus oder sogar stufenlos bereitgestellt werden, um eine noch genauere Ermittlung der aktuellen Ausrichtung zu ermöglichen. Beispielsweise kann der Zustand mit einem Integer-Wert beschrieben werden, wobei entweder jedem Integer-Wert mindestens ein Versatzwert zugeordnet sein kann (z. B. jeweils der Versatz gegenüber einem Wert von Null), oder aus dem Integer-Wert ein Versatzwert errechenbar ist.

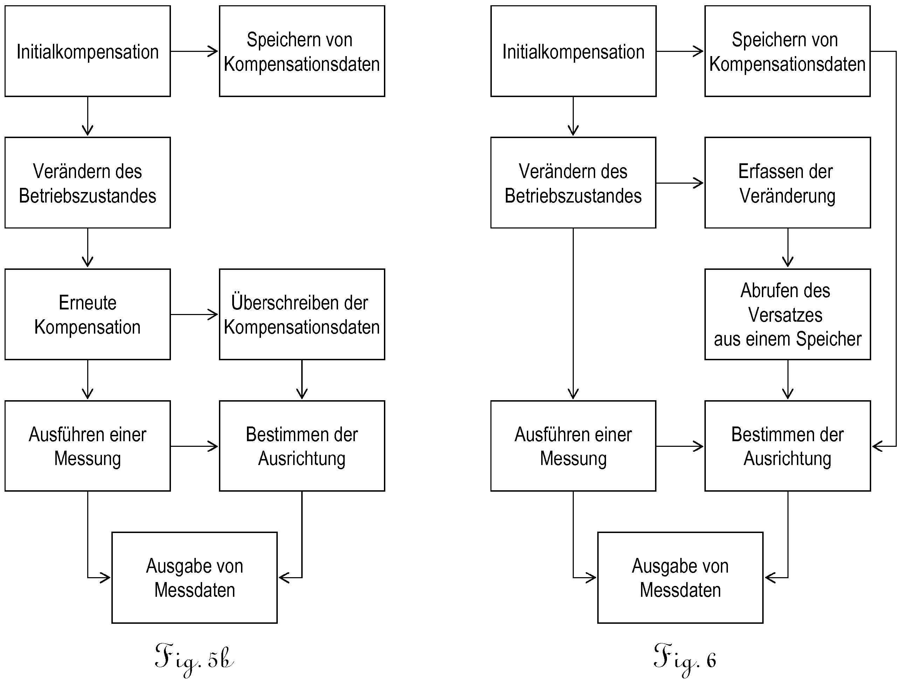

In den Figuren 5a und 5b werden mittels Flussdiagrammen zunächst beispielhafte Verfahren des Standes der Technik zum Bestimmen einer azimutalen Ausrichtung illustriert.

Figur 5a zeigt ein Verfahren, bei dem nach der ersten Kompensation am Ort der Messung (Initialkompensation) ohne Veränderung des Betriebszustandes direkt eine Messung erfolgt. Nach Ausführen der Initialkompensation werden entsprechende Kompensationsdaten gespeichert. Nach Ausführung der eigentlichen Messung werden diese Kompensationsdaten zum Bestimmen der azimutalen Ausrichtung des Gerätes herangezogen, die zur Berechnung der Messdaten nötig ist. Die Messdaten werden dem Benutzer ausgegeben.

Figur 5a zeigt ein Verfahren, bei dem nach der Initialkompensation eine Veränderung des Betriebszustandes erfolgt, und eine zusätzliche Kompensation durchgeführt wird. Nach Ausführen der Initialkompensation werden auch hier entsprechende Kompensationsdaten gespeichert. Dann wird der Betriebszustand des Gerätes so geändert, dass sich das gerätefeste Störfeld verändert. Beispielsweise wird ein zuschaltbares elektrisches System ein- oder ausgeschaltet, oder ein hartmagnetisches Bauteil des Gerätes wird verschoben. Sofern der Benutzer die Notwendigkeit überhaupt erkennt, wird nun eine erneute Kompensation durchgeführt. Die bereits gespeicherten Kompensationsdaten sind obsolet und werden durch neue überschrieben. Nach Ausführung der eigentlichen Messung werden diese neuen Kompensationsdaten zum Bestimmen der azimutalen Ausrichtung des Gerätes herangezogen, die zur Berechnung der Messdaten nötig ist. Die Messdaten werden wie gehabt dem Benutzer ausgegeben.

Figur 6 zeigt ein Flussdiagramm zur Illustration eines erfindungsgemässen Verfahrens. Auch dieses beginnt mit einer Initialkompensation am Ort der Messung. Entsprechende Kompensationsdaten werden gespeichert. Wird nun der Betriebszustand so geändert, dass sich das gerätefeste Störfeld verändert, wird dies erfindungsgemäss erfasst. Abhängig von der Veränderung wird ein entsprechender Versatzwert, der die Veränderung des gerätefesten Störfeldes repräsentiert und ab Werk in einem Speicher des Gerätes hinterlegt ist, aus diesem Speicher abgerufen, sobald die eigentliche Messung erfolgt. Unter Berücksichtigung der ursprünglichen Kompensationsdaten und des Versatzes kann dann die Ausrichtung bestimmt werden, ohne dass eine erneute Kompensation erfolgen muss. Die Ausrichtung wird zur Berechnung der Messdaten herangezogen, die dem Benutzer angezeigt werden.

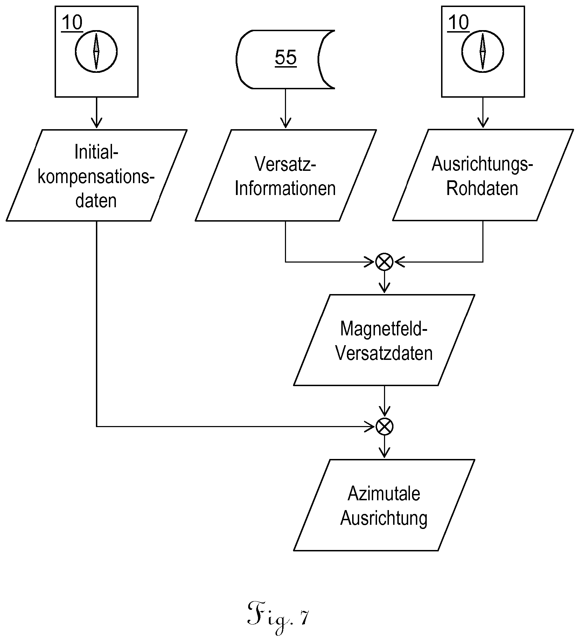

Figur 7 illustriert den Datenfluss bei einer beispielhaften Ausführungsform des Verfahrens. Dabei werden durch den Magnetkompass 10 zunächst die Initialkompensationsdaten bereitgestellt und gespeichert. Die Speichereinheit 55 der Kompensationseinrichtung stellt bei einem Ermitteln einer Betriebszustandsveränderung die entsprechenden Versatz-Informationen bereit. Bei Auslösung der Messung werden durch den Magnetkompass 10 die (unkompensierten) Ausrichtungsrohdaten ermittelt. Aus den Versatz-Informationen und den Ausrichtungsrohdaten werden dann zunächst Magnetfeld-Versatzdaten berechnet. Aus diesen Magnetfeld-Versatzdaten kann dann schliesslich mittels der Initialkompensationsdaten die azimutale Ausrichtung ermittelt werden.

Es versteht sich, dass diese dargestellten Figuren nur mögliche Ausführungsbeispiele schematisch darstellen. Die verschiedenen Ansätze können ebenso miteinander wie mit Verfahren und Geräten des Stands der Technik kombiniert werden.

**Patentansprüche**

1. Optoelektronisches Messgerät (1) mit einem elektronischen Magnetkompass (10) zum Bestimmen einer azimutalen Ausrichtung (a) des Messgeräts (1) und einer dem Magnetkompass (10) zugeordneten Kompensationseinrichtung (50) zum Kompensieren gerätefester Störfelder, wobei

   - das Messgerät (1) ein handhaltbares optoelektronisches Beobachtungsgerät ist und eine Anzeigeeinheit zum Anzeigen der azimutalen Ausrichtung (a) aufweist, wobei das Beobachtungsgerät ein Zielfernglas mit einer Zielachse (Z) aufweist und zum Bestimmen von Zielkoordinaten eines entfernten Zielobjekts ausgebildet ist, und im Beobachtungsgerät ein Laserentfernungsmesser integriert ist, und
   - das Messgerät (1) dazu ausgestaltet ist, mindestens zwei definierte, wiederholbare Betriebszustände einzunehmen, wobei das Messgerät (1) in jedem der Betriebszustände ein unterschiedliches gerätefestes Störfeld aufweist,
   - das Messgerät (1) mindestens ein zuschaltbares elektrisches System (22, 24, 26) aufweist,
   - der erste und der zweite Betriebszustand des Messgerätes (1) sich zumindest hinsichtlich eines aktuellen Zustandes des elektrischen Systems (22, 24, 26) voneinander unterscheiden, und
   - die Kompensationseinrichtung (50) eine Kompensationsfunktionalität aufweist zum Durchführen einer Initialkompensation des elektronischen Magnetkompasses (10) in einem ersten Betriebszustand des Messgerätes (1) am Ort der Messung, wobei im Rahmen der Initialkompensation Initialkompensationsdaten ermittelt und gespeichert werden,

   **dadurch gekennzeichnet, dass**
   die Kompensationseinrichtung (50) aufweist

   - eine Erfassungseinheit zum Erfassen eines aktuellen Betriebszustandes des Messgerätes (1),
   - eine Speichereinheit (55), in der ab Werk ein aus den unterschiedlichen gerätefesten Störfeldern resultierender magnetischer Versatz (13) zwischen dem ersten Betriebszustand und einem zweiten Betriebszustand des Messgerätes (1) hinterlegt ist, und
   - eine Recheneinheit zum Berechnen der azimutalen Ausrichtung (a) des Messgeräts (1) in Abhängigkeit von einem ermittelten Betriebszustand und basierend auf den Initialkompensationsdaten und dem magnetischen Versatz (13),

wobei

- die Erfassungseinheit zum Erkennen eines aktuellen Zustandes des elektrischen Systems ausgestaltet ist,
- der erste und der zweite Betriebszustand des Messgerätes (1) sich in einer aktuellen Stromstärke und/oder Spannung in dem elektrischen System voneinander unterscheiden, und
- die Erfassungseinheit zum Ermitteln einer aktuellen Stromstärke und/oder Spannung in dem elektrischen System ausgestaltet ist.

2. Messgerät (1) nach Anspruch 1, aufweisend eine Schnittstelle zum Bereitstellen eines Signals, das Information über die azimutale Ausrichtung (a) umfasst, für einen externen Empfänger.

3. Messgerät (1) nach Anspruch 1 oder Anspruch 2, wobei das mindestens eine zuschaltbare elektrische System ein Nachtsichtsystem (22) ist.

4. Messgerät (1) nach einem der vorangehenden Ansprüche, wobei das mindestens eine zuschaltbare elektrische Systemeine Anzeigeeinrichtung ist, insbesondere aufweisend ein LCD-Display (26), und eine Helligkeitsregelung aufweist.

5. Messgerät (1) nach einem der vorangehenden Ansprüche, wobei das zuschaltbare elektrische System

- ein GPS-Modul oder
- ein Bluetooth-Modul (24) ist.

6. Messgerät (1) nach einem der vorangehenden Ansprüche,
**gekennzeichnet durch**
mindestens ein hartmagnetisches Bauteil, das dazu ausgestaltet ist, mindestens zwei unterschiedliche Positionen im oder am Messgerät (1) einzunehmen, wobei der erste und der zweite Betriebszustand sich darin voneinander unterscheiden, dass das hartmagnetische Bauteil jeweils eine andere Position aufweist, insbesondere wobei das hartmagnetische Bauteil

- ein mechanischer Schalter (40, 44), insbesondere ein von einem Benutzer zu betätigender Kipp-, Dreh- oder Schiebeschalter ist, oder
- ein motorisiert verfahrbares Element ist, insbesondere im Rahmen eines Zoom-Vorgangs verfahrbares optisches Element (32).

7. Messgerät (1) nach einem der vorangehenden Ansprüche,
**dadurch gekennzeichnet, dass**
der Magnetkompass (10) mindestens drei gerätefest angeordnete Messsensoren zum Messen eines Magnetfelds und der Richtung des Gravitationsfelds aufweist.

8. Messgerät (1) nach einem der vorangehenden Ansprüche,
**dadurch gekennzeichnet, dass**
das Messgerät (1) in dem ersten und in dem zweiten Betriebszustand ein jeweils unterschiedliches hartmagnetisches gerätefestes Störfeld aufweist.

9. Verfahren zum Bestimmen einer azimutalen Ausrichtung (a) eines als handhaltbares optoelektronisches Beobachtungsgerät ausgestalteten optoelektronischen Messgerätes (1), wobei das Messgerät (1)

- eine Anzeigeeinheit zum Anzeigen der azimutalen Ausrichtung (a) aufweist,
- einen Magnetkompass (10) aufweist, und
- dazu ausgestaltet ist, eine Mehrzahl an definierten, wiederholbaren Betriebszuständen mit einem jeweils unterschiedlichen gerätefesten Störfeld einzunehmen,

wobei das Beobachtungsgerät ein Zielfernglas mit einer Zielachse (Z) aufweist und zum Bestimmen von Zielkoordinaten eines entfernten Zielobjekts ausgebildet ist, und im Beobachtungsgerät ein Laserentfernungsmesser integriert ist,
wobei das Verfahren aufweist

- eine Initialkompensation des elektronischen Magnetkompasses (10) in einem ersten Betriebszustand des Messgerätes (1) am Ort der Messung;
- ein automatisches Erkennen des ersten Betriebszustandes und des zweiten Betriebszustandes;
- ein automatisches Bereitstellen von Informationen über einen ab Werk in einem Speicher des Beobachtungsgerätes hinterlegten, aus den unterschiedlichen gerätefesten Störfeldern resultierenden magnetischen Versatz (13) zwischen dem ersten und dem zweiten Betriebszustand; und
- ein Bestimmen der azimutalen Ausrichtung (a) des Messgerätes (1) mittels des Magnetkompasses (10) in einem zweiten Betriebszustand des Messgerätes (1),

wobei das Bestimmen der azimutalen Ausrichtung (a) unter Berücksichtigung des magnetischen Versatzes (13) erfolgt, wobei

- der erste und der zweite Betriebszustand des Messgerätes (1) sich zumindest hinsichtlich eines aktuellen Zustandes eines elektrischen Systems (22, 24, 26) des Messgerätes (1) voneinander unterscheiden,
- das Erkennen des ersten und zweiten Betriebszustandes des Messgerätes (1) mindestens ein Erkennen eines aktuellen Zustandes des elektrischen Systems (22, 24, 26) umfasst,
- das Erkennen des aktuellen Zustandes des elektrischen Systems (22, 24, 26) ein Ermitteln einer aktuellen Stromstärke und/oder Spannung in dem elektrischen System umfasst,
- die Informationen über den magnetischen Versatz (13) auf mindestens einer ermittelten Stromstärke und/oder Spannung basierend bereitgestellt werden,
- im Rahmen der Initialkompensation Initialkompensationsdaten ermittelt und gespeichert werden,
- in dem zweiten Betriebszustand des Messgerätes (1) von dem Magnetkompass (10) Magnetfeld-Rohdaten erfasst werden,
- der magnetische Versatz (13) und die Magnetfeld-Rohdaten zur Berechnung von Magnetfeld-Versatzdaten verwendet werden, und
- das Bestimmen der azimutalen Ausrichtung (a) basierend auf den Initialkompensationsdaten und den Magnetfeld-Versatzdaten erfolgt.

**10.** Verfahren nach Anspruch 9,
wobei das elektrische System

- ein Nachtsichtsystem (22) oder
- eine Anzeigeeinrichtung ist, insbesondere aufweisend ein LCD-Display (26), und
- eine Helligkeitsregelung aufweist.

**11.** Verfahren nach Anspruch 9 oder Anspruch 10, wobei das elektrische System

- ein GPS-Modul oder
- ein Bluetooth-Modul (24) ist.

**12.** Verfahren nach einem der Ansprüche 9 bis 11,
**dadurch gekennzeichnet, dass**

- der erste und der zweite Betriebszustand des Messgerätes (1) sich zumindest darin voneinander unterscheiden, dass ein hartmagnetisches Bauteil des Messgerätes (1) eine andere Position aufweist, und
- das Erkennen des ersten und zweiten Betriebszustandes des Messgerätes (1) mindestens ein Erkennen einer aktuellen Position (44) des hartmagnetischen Bauteiles umfasst,

insbesondere wobei das hartmagnetische Bauteil

- ein von einem Benutzer zu betätigender Kipp-, Dreh- oder Schiebeschalter (40, 42) ist, oder
- ein automatisch verfahrbares Element ist, insbesondere ein optisches Element (32), das im Rahmen eines Zoom-Vorgangs verfahrbar ist.

**13.** Verfahren nach einem der Ansprüche 9 bis 12,
**gekennzeichnet durch**
ein Erkennen eines Wechsels von dem ersten Betriebszustand in den zweiten Betriebszustand, insbesondere wobei das Erkennen des Wechsels ein Erfassen einer Positionsveränderung eines hartmagnetischen Bauteiles des Messgerätes (1) umfasst.

14. Verfahren nach Anspruch 13,
wobei das Erkennen des Wechsels ein Erfassen eines Ein- bzw. Ausschaltens des elektrischen Systems des Messgerätes (1) umfasst.

15. Computerprogrammprodukt mit Programmcode, der auf einem maschinenlesbaren Träger gespeichert ist, zur Ausführung des Verfahrens nach einem der Ansprüche 9 bis 14, insbesondere wenn das Programm auf einer als Kompensationseinrichtung (50) des Messgerätes (1) nach einem der Ansprüche 1 bis 8 ausgebildeten elektronischen Datenverarbeitungseinheit ausgeführt wird.

**Claims**

1. Optoelectronic measuring device (1) having an electronic magnetic compass (10) for determining an azimuthal alignment (a) of the measuring device (1) and a compensation unit (50), which is associated with the magnetic compass (10), for compensating for device-fixed interference fields, wherein

- the measuring device (1) is a handheld optoelectronic observation device having a display unit for displaying the azimuthal alignment (a), wherein the observation device comprises aiming binoculars having an aiming axis (Z) and is configured to determine target coordinates of a remote target object, wherein a laser distance meter is integrated in the observation device,
- the measuring device (1) is designed to assume at least two defined, repeatable operating states, wherein the measuring device (1) has a different device-fixed interference field in each of the operating states, and
- the measuring device (1) comprises at least one activatable electrical system (22, 24, 26),
- the first and the second operating state of the measuring device (1) differ from one another at least with respect to a present state of the electrical system, and
- the compensation unit (50) has a compensation functionality for carrying out an initial compensation of the electronic magnetic compass (10) in a first operating state of the measuring device (1) at the location of the measurement, wherein in the scope of the initial compensation, initial compensation data are ascertained and stored,

**characterized in that**
the compensation unit (50) comprises

- a detection unit for detecting a present operating state of the measuring device (1),
- a memory unit (55) in which a magnetic offset (13) is provided that is stored at the factory and results from the different device-fixed interference fields between the first operating state and a second operating state of the measuring device (1), and
- a computer unit for computing the azimuthal alignment (a) of the measuring device (1) depending on an ascertained operating state and based on the magnetic offset (13),

wherein

- the detection unit is designed to recognize a present state of the electrical system,
- the first and the second operating state of the measuring device (1) differ from one another in a present current strength and/or voltage in the electrical system, and
- the detection unit is designed to ascertain a present current strength and/or voltage in the electrical system.

2. Measuring device (1) according to claim 1, comprising an interface for providing a signal, which comprises information about the azimuthal alignment (a), for an external receiver.

3. Measuring device (1) according to claim 1 or claim 2, wherein the activatable electrical system is a night vision system (22).

4. Measuring device (1) according to any one of the preceding claims, wherein the activatable electrical system is a display unit, in particular having an LCD display screen (26), and comprises a brightness regulator.

5. Measuring device (1) according to any one of the preceding claims, wherein the activatable electrical system is

   - a GPS module, or
   - a Bluetooth module (24).

6. Measuring device (1) according to any one of the preceding claims,
   **characterized by**
   at least one hard-magnetic component, which is designed for the purpose of assuming at least two different positions in or on the measuring device (1), wherein the first and the second operating state differ from one another in that the hard-magnetic component has a different position in each case, in particular wherein the hard-magnetic component

   - is a mechanical switch (40, 44), in particular a toggle, rotating, or sliding switch to be actuated by a user, or
   - is an element movable in a motorized manner, in particular an optical element (32) movable in the scope of a zoom procedure.

7. Measuring device (1) according to any one of the preceding claims,
   **characterized in that**
   the magnetic compass (10) has at least three measuring sensors arranged fixedly on the device for measuring a magnetic field and the direction of the gravitational field.

8. Measuring device (1) according to any one of the preceding claims,
   **characterized in that**
   the measuring device (1) has a different hard-magnetic device-fixed interference field in each case in the first and in the second operating state.

9. Method for determining an azimuthal alignment (a) of an optoelectronic measuring device (1) that is configured as a handheld optoelectronic observation device, wherein the measuring device (1)

   - comprises a display unit for displaying the azimuthal alignment (a),
   - has a magnetic compass (10), and
   - is designed to assume a plurality of defined, repeatable operating states each having a different device-fixed interference field,

   wherein the observation device comprises aiming binoculars having an aiming axis (Z) and is configured to determine target coordinates of a remote target object, wherein a laser distance meter is integrated in the observation device, wherein the method comprises

   - an initial compensation of the electronic magnetic compass (10) in a first operating state of the measuring device (1) at the location of the measurement;
   - an automatic recognition of the first operating state and the second operating state;
   - an automatic provision of information about a magnetic offset (13), which is provided at the factory in a memory of the observation device and results from the different device-fixed interference fields between the first operating state and a second operating state; and
   - a determination of the azimuthal alignment (a) of the measuring device (1) by means of the magnetic compass (10) in a second operating state of the measuring device (1),

   wherein the determination of the azimuthal alignment (a) takes place in consideration of the magnetic offset (13), wherein

   - the first and the second operating state of the measuring device (1) differ from one another at least with respect to a present state of an electrical system (22, 24, 26) of the measuring device (1),
   - the recognition of the first and second operating states of the measuring device (1) comprises at least a recognition of a present state of the electrical system,
   - the recognition of the present state of the electrical system comprises an ascertainment of a present current strength and/or voltage in the electrical system,
   - the information about the magnetic offset (13) is provided based on at least one ascertained current strength and/or voltage,

- in the scope of the initial compensation, initial compensation data are ascertained and stored,
- in the second operating state of the measuring device (1), magnetic field raw data are detected by the magnetic compass (10),
- the magnetic offset (13) and the magnetic field raw data are used to compute magnetic field offset data, and
- the determination of the azimuthal alignment (a) is performed based on the initial compensation data and the magnetic field offset data.

10. Method according to claim 9,
wherein the electrical system

- is a night vision system (22),
- is a display unit, in particular having an LCD display screen (26), and
- comprises a brightness regulator.

11. Method according to claim 9 or claim 10,
wherein the electrical system is

- a GPS module, or
- a Bluetooth module (24).

12. Method according to any one of claims 9 to 11,
**characterized in that**

- the first and the second operating state of the measuring device (1) differ from one another at least in that a hard-magnetic component of the measuring device (1) has a different position, and
- the recognition of the first and second operating states of the measuring device (1) comprises at least a recognition of a present position (44) of the hard-magnetic component,

in particular wherein the hard-magnetic component

- is a toggle, rotating, or sliding switch (40, 42) to be actuated by a user, or
- is an automatically movable element, in particular an optical element (32) movable in the scope of a zoom procedure.

13. Method according to any one of claims 9 to 12,
**characterized by**
a recognition of a change from the first operating state into the second operating state, in particular wherein the recognition of the change comprises a detection of a position change of a hard-magnetic component of the measuring device (1).

14. Method according to claim 13, wherein the recognition of the change comprises a detection of turning on or off of the electrical system of the measuring device (1).

15. Computer program product having program code which is stored on a machine-readable carrier, for executing the method according to any one of Claims 9 to 14, in particular when the program is executed on an electronic data processing unit designed as a compensation unit (50) of the measuring device (1) according to any one of claims 1 to 8.


**Revendications**

1. Appareil de mesure optoélectronique (1) doté d'un compas magnétique électronique (10) pour déterminer une orientation azimutale (a) de l'appareil de mesure (1) et d'un dispositif de compensation (50) associé au compas magnétique (10) pour compenser des champs parasites liés à l'appareil, dans lequel

- l'appareil de mesure (1) est un appareil d'observation optoélectronique portatif et présente une unité d'affichage pour afficher l'orientation azimutale (a), l'appareil d'observation présentant une jumelle de visée avec un axe de visée (Z) et étant conçu pour déterminer les coordonnées cibles d'un objet cible distant, et un télémètre laser étant intégré dans l'appareil d'observation, et

- l'appareil de mesure (1) est conçu pour prendre au moins deux états de fonctionnement définis reproductibles, l'appareil de mesure (1) présentant un champ parasite lié à l'appareil différent dans chacun des états de fonctionnement,
- l'appareil de mesure (1) présente au moins un système électrique enclenchable (22, 24, 26),
- le premier et le deuxième état de fonctionnement de l'appareil de mesure (1) se distinguent l'un de l'autre au moins en ce qui concerne un état actuel du système électrique (22, 24, 26) et
- le dispositif de compensation (50) présente une fonctionnalité de compensation pour effectuer une compensation initiale du compas magnétique électronique (10) dans un premier état de fonctionnement de l'appareil de mesure (1) à l'endroit de la mesure, des données de compensation initiale étant déterminées et stockées dans le cadre de la compensation initiale,

**caractérisé en ce que**
le dispositif de compensation (50) présente

- une unité de détection pour détecter un état de fonctionnement actuel de l'appareil de mesure (1),
- une unité de mémoire (55) dans laquelle est stocké, en usine, un décalage magnétique (13) entre le premier état de fonctionnement et un deuxième état de fonctionnement de l'appareil de mesure (1) résultant des différents champs parasites liés à l'appareil, et
- une unité de calcul pour calculer l'orientation azimutale (a) de l'appareil de mesure (1) en fonction d'un état de fonctionnement déterminé et sur la base des données de compensation initiale et du décalage magnétique (13),

dans lequel

- l'unité de détection est conçue pour détecter un état actuel du système électrique,
- le premier et le deuxième état de fonctionnement de l'appareil de mesure (1) se distinguent l'un de l'autre par une intensité de courant et/ou une tension dans le système électrique, et
- l'unité de détection est conçue pour déterminer une intensité de courant et/ou une tension actuelle dans le système électrique.

2. Appareil de mesure (1) selon la revendication 1,
présentant une interface pour mettre à disposition un signal qui comprend une information sur l'orientation azimutale (a) à un récepteur externe.

3. Appareil de mesure (1) selon la revendication 1 ou la revendication 2,
dans lequel ledit au moins un système électrique enclenchable est un système de vision nocturne (22).

4. Appareil de mesure (1) selon l'une des revendications précédentes,
dans lequel ledit au moins un système électrique enclenchable est un dispositif d'affichage, présentant en particulier un écran LCD (26), et présente une régulation de luminosité.

5. Appareil de mesure (1) selon l'une des revendications précédentes,
dans lequel le système électrique enclenchable est

- un module GPS ou
- un module Bluetooth (24).

6. Appareil de mesure (1) selon l'une des revendications précédentes,
**caractérisé par**
au moins un composant magnétique dur qui est conçu pour prendre au moins deux positions différentes dans ou sur l'appareil de mesure (1), le premier et le deuxième état de fonctionnement se distinguant l'un de l'autre en ce que le composant magnétique dur présente une position différente dans chaque cas, en particulier le composant magnétique dur étant

- un commutateur mécanique (40, 44), en particulier un commutateur basculant, rotatif ou coulissant à actionner par un utilisateur, ou
- un élément déplaçable par moteur, en particulier un élément optique (32) déplaçable dans le cadre d'une opération de zoom.

**7.** Appareil de mesure (1) selon l'une des revendications précédentes,
**caractérisé en ce que**
le compas magnétique (10) présente au moins trois capteurs de mesure disposés de manière fixe sur l'appareil pour mesurer un champ magnétique et la direction du champ gravitationnel.

**8.** Appareil de mesure (1) selon l'une des revendications précédentes,
**caractérisé en ce que**
l'appareil de mesure (1) présente un champ parasite lié à l'appareil magnétique dur chaque fois différent dans le premier et dans le deuxième état de fonctionnement.

**9.** Procédé pour déterminer une orientation azimutale (a) d'un appareil de mesure optoélectronique (1) conçu comme un appareil d'observation optoélectronique portatif, dans lequel l'appareil de mesure (1)

- présente une unité d'affichage pour afficher l'orientation azimutale (a),
- présente un compas magnétique (10) et
- est conçu pour prendre une pluralité d'états de fonctionnement définis reproductibles, avec un champ parasite lié à l'appareil chaque fois différent,

l'appareil d'observation présentant une jumelle de visée avec un axe de visée (Z) et étant conçu pour déterminer les coordonnées cibles d'un objet cible distant, et un télémètre laser étant intégré dans l'appareil d'observation, le procédé présentant

- une compensation initiale du compas magnétique électronique (10) dans un premier état de fonctionnement de l'appareil de mesure (1) à l'endroit de la mesure ;
- une détection automatique du premier état de fonctionnement et du deuxième état de fonctionnement ;
- une mise à disposition automatique d'informations sur un décalage magnétique (13) entre le premier et le deuxième état de fonctionnement, qui est stocké en usine dans une mémoire de l'appareil d'observation et qui résulte des différents champs parasites liés à l'appareil ; et
- une détermination de l'orientation azimutale (a) de l'appareil de mesure (1) au moyen du compas magnétique (10) dans un deuxième état de fonctionnement de l'appareil de mesure (1),

dans lequel la détermination de l'orientation azimutale (a) est effectuée en tenant compte du décalage magnétique (13), dans lequel

- le premier et le deuxième état de fonctionnement de l'appareil de mesure (1) se distinguent l'un de l'autre au moins en ce qui concerne un état actuel d'un système électrique (22, 24, 26) de l'appareil de mesure (1),
- la détection du premier et du deuxième état de fonctionnement de l'appareil de mesure (1) comprend au moins une détection d'un état actuel du système électrique (22, 24, 26),
- la détection de l'état actuel du système électrique (22, 24, 26) comprend une détermination d'une intensité de courant et/ou d'une tension dans le système électrique,
- les informations sur le décalage magnétique (13) sont mises à disposition sur la base d'au moins une intensité de courant et/ou une tension déterminée,
- des données de compensation initiale sont déterminées et stockées dans le cadre de la compensation initiale,
- dans le deuxième état de fonctionnement de l'appareil de mesure (1), des données brutes de champ magnétique sont acquises par le compas magnétique (10),
- le décalage magnétique (13) et les données brutes de champ magnétique sont utilisés pour calculer des données de décalage de champ magnétique, et
- l'orientation azimutale (a) est déterminée sur la base des données de compensation initiale et des données de décalage de champ magnétique.

**10.** Procédé selon la revendication 9,
dans lequel le système électrique

- est un système de vision nocturne (22) ou
- un dispositif d'affichage, présentant en particulier un écran LCD (26), et
- présente une régulation de luminosité.

**11.** Procédé selon la revendication 9 ou la revendication 10,

dans lequel le système électrique est

- un module GPS ou
- un module Bluetooth (24).

12. Procédé selon l'une des revendications 9 à 11,
**caractérisé en ce que**

- le premier et le deuxième état de fonctionnement de l'appareil de mesure (1) se distinguent l'un de l'autre au moins **en ce qu'**un composant magnétique dur de l'appareil de mesure (1) présente une position différente, et
- la détection du premier et du deuxième état de fonctionnement de l'appareil de mesure (1) comprend au moins une détection d'une position actuelle (44) du composant magnétique dur,

en particulier dans lequel le composant magnétique dur

- est un commutateur basculant, rotatif ou coulissant (40, 42) à actionner par un utilisateur ou
- est un élément déplaçable automatiquement, en particulier un élément optique (32) déplaçable dans le cadre d'une opération de zoom.

13. Procédé selon l'une des revendications 9 à 12,
**caractérisé par**
une détection d'un passage du premier état de fonctionnement dans le deuxième état de fonctionnement, en particulier dans lequel la détection du passage comprend une détection d'un changement de position d'un composant magnétique dur de l'appareil de mesure (1).

14. Procédé selon la revendication 13,
dans lequel la détection du passage comprend une détection d'une activation/désactivation du système électrique de l'appareil de mesure (1).

15. Produit programme d'ordinateur comprenant un code de programme stocké sur un support lisible par machine, destiné à exécuter le procédé selon l'une des revendications 9 à 14, en particulier lorsque le programme est exécuté sur une unité électronique de traitement de données conçue comme un dispositif de compensation (50) de l'appareil de mesure (1) selon l'une des revendications 1 à 8.

Fig. 1

Fig. 2

Fig. 3a

Fig. 3b

30

1

22

10

21

50

27

32

28

23

20

26

25

24

𝔉𝔦𝔤. 4

| Initialkompensation | → | Speichern von Kompensationsdaten |
|---|---|---|

↓ ↓

| Ausführen einer Messung | → | Bestimmen der Ausrichtung |
|---|---|---|

↓ ↓

Ausgabe von Messdaten

𝔉𝔦𝔤. 5a

Fig. 6

Speichern von Kompensationsdaten — Erfassen der Veränderung — Abrufen des Versatzes aus einem Speicher — Bestimmen der Ausrichtung — Initialkompensation — Verändern des Betriebszustandes — Ausführen einer Messung — Ausgabe von Messdaten

Fig. 5b

Speichern von Kompensationsdaten — Überschreiben der Kompensationsdaten — Bestimmen der Ausrichtung — Initialkompensation — Verändern des Betriebszustandes — Erneute Kompensation — Ausführen einer Messung — Ausgabe von Messdaten

*Fig. 7*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7325320 B2
- US 4949089 A
- DE 19609762 C1
- US 20150012234 A1
- US 20120070137 A1
- US 20070233381 A1
- US 20110106474 A1